Europäisches Patentamt

European Patent Office

Office européen des brevets

(11) Veröffentlichungsnummer: **0 354 618**
**A2**

(12) **EUROPÄISCHE PATENTANMELDUNG**

(21) Anmeldenummer: 89202036.3

(22) Anmeldetag: 04.08.89

(51) Int. Cl.⁴ **G01N 21/31 , G01N 30/74**

(30) Priorität: 10.08.88 DE 3827066

(43) Veröffentlichungstag der Anmeldung:
14.02.90 Patentblatt 90/07

(84) Benannte Vertragsstaaten:
**DE FR GB**

(71) Anmelder: **Philips Patentverwaltung GmbH**
**Wendenstrasse 35 Postfach 10 51 49**
**D-2000 Hamburg 1(DE)**

(84) **DE**

Anmelder: **N.V. Philips' Gloeilampenfabrieken**
**Groenewoudseweg 1**
**NL-5621 BA Eindhoven(NL)**

(84) **FR GB**

(72) Erfinder: **Blaffert, Thomas**
**Schlegelsweg 7**
**D-2000 Hamburg 76(DE)**

(74) Vertreter: **Kupfermann, Fritz-Joachim,**
**Dipl.-Ing. et al**
**Philips Patentverwaltung GmbH**
**Wendenstrasse 35 Postfach 10 51 49**
**D-2000 Hamburg 1(DE)**

(54) **Chemisches Analysegerät.**

(57) Die Erfindung bezieht sich auf ein chemisches Analysegerät zur Bestimmung der Konzentrationswerte und der Spektralwerte von zeitlich aufgetrennten Substanzen einer Probe in einer flüssigen oder gasförmigen Trägersubstanz. Das chemische Analysegerät umfaßt eine Detektoranordnung (8), welche wenigstens eine Lichtquelle zur Sendung von Licht auf die zeitlich aufgetrennten Substanzen der Probe und die Trägersubstanz und welche eine Empfängeranordnung enthält zum Messen der Intensität des von den Substanzen beeinflußten Lichts über einen vorgegebenen Spektralbereich und über eine vorgegebene Dauer. Des weiteren ist eine Auswerteeinheit (12) vorhanden, welche die von der Detektoranordnung (8) ermittelten Spektralwerte jeder Messung in einer Datenmatrix X zusammenfaßt und welche die Konzentrationswerte einer Substanz nach einer Singuläre-Werte-Zerlegung der Datenmatrix X durch Schätzung ermittelt. Weiter berechnet die Auswerteschaltung (12) außerdem die Konzentrationswerte der Trägersubstanz mittels Approximation durch einen linearen zeitlichen Verlauf und berechnet daraus die Spektralwerte der Substanzen der Probe und der Trägersubstanz.

FIG.1

Xerox Copy Centre

### Chemisches Analysegerät

Die Erfindung bezieht sich auf ein chemisches Analysegerät zur Bestimmung der Konzentrationswerte und der Spektralwerte von zeitlich aufgetrennten Substanzen einer Probe in einer flüssigen oder gasförmigen Trägersubstanz mit einer Detektoranordnung, welche wenigstens eine Lichtquelle zur Sendung von Licht auf die zeitlich aufgetrennten Substanzen der Probe und die Trägersubstanz und welche eine Empfängeranordnung enthält zum Messen der Intensität des von den Substanzen beeinflußten Lichts über einen vorgegebenen Spektralbereich und über eine vorgegebene Dauer, und
mit einer Auswerteeinheit, welche die von der Detektoranordnung ermittelten Spektralwerte jeder Messung in einer Datenmatrix $\underline{X}$ zusammenfaßt und welche die Konzentrationswerte einer Substanz nach einer Singuläre-Werte-Zerlegung der Datenmatrix $\underline{X}$ durch Schätzung ermittelt.

Solche chemischen Analysegeräte sind beispielsweise ein Gaschromatograph, ein Flüssigkeitschromatograph oder ein Infrarot-Spektrometer. Hierbei werden in einer Trennanordnung die in einer flüssigen oder gasförmigen Trägersubstanz befindlichen flüssigen oder gasförmigen Substanzen der Probe zeitlich aufgetrennt. Beispielsweise wird bei der Flüssigkeitschromatographie das Auftrennen in einer chromatographischen Säule durchgeführt, die mit Quarzpartikeln gefüllt ist. In die Trägersubstanz, die durch diese Säule gepumpt wird, wird die Probe injiziert, die durch Wechselwirkung mit der Oberfläche des Säulenmaterials (Quarzpartikel) einige Zeit in der Säule verweilt. Die Probensubstanzen erscheinen dadurch zeitlich nacheinander in variablen Konzentrationen am Ausgang der Trennanordnung Durch Überlagerung der verschiedenen Konzentrationsverläufe der Substanzen läßt sich aber nicht eindeutig ein Konzentrationsverlauf (Chromatogramm) einer Substanz zuordnen. Die aus der Trennanordnung austretende Trägersubstanz mit Probenbestandteilen wird durch eine Detektoranordnung geleitet. In der Detektoranordnung wird auf die vorhandenen Substanzen der Probe und der Trägersubstanz Licht einer Lichtquelle gestrahlt. Gemessen wird die Absorption des Lichts bei verschiedenen Wellenlängen durch eine Anzahl (z.B. 128) von Fotodioden (Empfängeranordnung). Eine Messung des Spektrums (Messung der Intensität des absorbierten Lichts) der durch die Detektoranordnung hindurchtretenden Substanzen wird dabei in äquidistanten Zeitabschnitten, z.B. jede Sekunde, durchgeführt. Die Gesamtmessung dauert in der Regel zwischen 3 und 30 Minuten, d.h. es werden dabei zwischen 180 und 2400 Messungen des Spektrums vorgenommen.

Die gemessenen Spektralwerte werden von der Detektoranordnung an eine Auswerteeinheit geliefert. Die Auswerteeinheit ermittelt aus den Meßwerten das Spektrum und den Konzentrationsverlauf jeder Substanz der Probe, wie das aus der Druckschrift B.G.M Vandeginste, W. Derks, G. Kateman, MULTICOMPONENT SELF-MODELLING CURVE RESOLUTION IN HIGH-PERFORMANCE LIQUID CHROMATOGRAPHY BY ITERATIVE TARGET TRANSFORMATION ANALYSIS, Analytica Chimica Acta, 173 (1985), Seiten 253-264, bekannt ist. Hierbei werden zuerst von der Auswerteeinheit die von der Detektoranordnung gemessenen Spektralwerte in einer (M*L)-Datenmatrix $\underline{X}$ (M Zeilen, L Spalten) zusammengefaßt:

$$\underline{X} = \begin{pmatrix} x_{11} & \cdot & \cdot & \cdot & x_{1L} \\ \cdot & & & & \cdot \\ \cdot & & & & \cdot \\ \cdot & & & & \cdot \\ x_{M1} & \cdot & \cdot & \cdot & x_{ML} \end{pmatrix} \qquad (1),$$

wobei in einer Zeile die Spektralwerte (L Wellenlängen) von einer Messung und in einer Spalte die Spektralwerte einer Wellenlänge von M Messungen untergebracht sind. Die Spektralwerte einer Messung sind dabei nach ihrem zeitlichen Auftreten aufeinanderfolgend sortiert.

Bei einem idealen chemischen Analysegerät entspricht die Datenmatrix $\underline{X}$ weitgehend dem produkt einer Konzentrationsmatrix $\underline{C}'$ und einer Spektralmatrix $\underline{S}'$:

2

$$\underline{X} = \underline{C}\ \underline{S}$$

$$\text{mit } \underline{C}' = \begin{pmatrix} c'_{11} & . & . & . & c'_{1N} \\ . & & & & . \\ . & & & & . \\ . & & & & . \\ c'_{M1} & . & . & . & c'_{MN} \end{pmatrix}$$

$$\text{und } \underline{S}' = \begin{pmatrix} s'_{11} & . & . & . & s'_{1L} \\ . & & & & . \\ . & & & & . \\ . & & & & . \\ s'_{N1} & . & . & . & s'_{NL} \end{pmatrix}$$

$(2)$

In der (M*N)-Konzentrationsmatrix $\underline{C}'$ sind in einer Spalte die Konzentrationswerte einer Substanz für die M Messungen (Konzentrationsverlauf) aufgeführt. Die Konzentrationswerte einer Spalte bilden ein Chromatogramm einer Substanz. Die Anzahl der Chromatogramme oder der Spalten ist gleich der Anzahl der N Substanzen. In der (N*L)-Spektralmatrix $\underline{S}'$ sind in einer Zeile die L Spektralwerte einer Substanz für L Wellenlängen aufgeführt. Die Spektralwerte einer Zeile bilden also ein Spektrum einer Substanz. Die Anzahl der Spektren oder der Zeilen ist gleich der Anzahl der N Substanzen.

Die Spektralmatrix $\underline{S}'$ bzw. Konzentrationsmatrix $\underline{C}'$ wird häufig mittels einer euklidischen Norm normiert. Es ergeben sich dadurch lediglich veränderte Skaleneinheiten.

Da die Meßwerte aber beispielsweise durch Nichtlinearitäten der Detektoranordnung, durch Streulicht oder durch Photonenrauschen beeinflußt sind, können die Spektralwerte und die Konzentrationswerte nur angenähert werden. Es hat sich in der Praxis aber gezeigt, daß die Fehler zwischen den tatsächlichen und den angenäherten Spektral- bzw. Konzentrationswerten sehr gering ist. Die Datenmatrix X kann also durch eine angenäherte Spektralmatrix $\underline{S}$ und eine Konzentrationsmatrix $\underline{C}$ approximiert werden:

$\underline{X} \approx \underline{C}\ \underline{S}$ (3).

Die Datenmatrix $\underline{X}$, in welcher die Meßwerte zusammengefaßt sind, enthält Redundanzen. Sie besteht also aus Informationsanteilen, aus denen die Spektral- bzw. Konzentrationswerte der Substanzen berechnet werden können, und Rauschanteilen. Mit Hilfe der Singuläre-Werte-Zerlegung wird die Matrix in Informationsanteile und Rauschanteile getrennt. Hierbei werden aus der Datenmatrix $\underline{X}$ drei Matrizen $\underline{U}$, $\underline{G}$ und $\underline{V}$ gebildet:

$\underline{X} = \underline{U}\ \underline{G}\ \underline{V}^T$ (4).

Die Spalten der (M*L)-Matrix $\underline{U}$ sind die L orthonormalen Eigenvektoren von $\underline{X}\ \underline{X}^T$, die Spalten der (L*L)-matrix $\underline{V}$ sind die L orthonormalen Eigenvektoren von $\underline{X}^T\underline{X}$ und die (L*L) - Diagonalmatrix $\underline{G}$ besteht aus L Diagonalelementen:

$\underline{G} = \text{diag}(g_1,...,g_L)$ (5),

wobei die L Diagonalelemente die Quadratwurzel der Eigenwerte zu diesen Eigenvektoren (singuläre Werte) enthalten. Eine ausführliche Beschreibung der Singuläre-Werte-Zerlegung kann dem Buch C.L. Lawson, R.J. Hanson, SOLVING LEAST SQUARES PROBLEMS, Prentice-Hall, Englewood Cliffs, New Jersey, 1974, entnommen werden.

Die Abtrennung der Rauschanteile erfolgt indem die Matrizen $\underline{U}$, $\underline{V}$ und $\underline{G}$ auf die signifikanten Spalten reduziert werden. Die Anzahl der Spalten entspricht dabei der Anzahl der $\overline{N}$ Substanzen. Hierbei werden zuerst die singulären Werte der Diagonalmatrix so umsortiert, daß sich ergibt:

$g_1 \geq g_2 \geq ... \geq g_i \geq ... \geq g_L$ (6).

Anschließend werden die singulären Werte $g_i$, $i = 1,...,L$, miteinander verglichen. Hierbei wird ein singulärer Wert $g_N$ gefunden, der bedeutend größer ist als die singulären Werte $g_{N+1},...,g_L$, die durch Rauschanteile hervorgerufen worden sind. In der Diagonalmatrix G werden dann die (N+1)-te bis L-te Spalte und Zeile gestrichen, so daß sich eine (N*N)-Diagonalmatrix $\overline{G}_N$ ergibt. Ebenfalls werden die Matrizen $\underline{U}$ und $\underline{V}$ um die (N+1)-te bis L-te Spalte verringert. Es ergibt sich dann die (M*N)-Matrix $\underline{U}_N$ und die (L*N)-

3

Matrix $V_N$. Daraus folgt also die Formel: $X \approx A_N = U_N G_N V_N^T$ (7),
wobei die (M*L)-Matrix $A_N$ den Rang N aufweist. Es hat sich in der Praxis gezeigt, daß das Produkt aus Konzentrationsmatrix $C$ und Spektralmatrix $S$ der Matrix $A_N$ entspricht:
$A_N = C S$ (8).

Die Konzentrationswerte einer Spalte der Konzentrationsmatrix $C$ bilden einen Konzentrationsvektor $c_j$ = $(c_{1j}, \ldots, c_{Mj})^T$ (Konzentrationsverlauf einer Substanz). Ein solcher Konzentrationsvektor stellt das Chromatogramm einer Substanz dar und wird aus einer Linearkombination eines Spaltenvektors $u_k$, $k = 1 \ldots, N$, der Matrix $U_N$ gebildet:

$$c_j = \sum_{k=1}^{N} d_{jk} u_k \quad , \quad j = 1, \ldots, N \qquad (9),$$

wobei die $d_{jk}$ Koeffizienten sind, die durch eine Schätzung zu finden sind. Alle $d_{jk}$ können in einer Matrix $D$ zusammengefaßt werden, so daß sich ergibt:
$C = U_N D^T$ (10),
wobei $D$ eine (N*N)-Matrix ist. Entsprechend ergibt sich die Spektralmatrix $S$ aus einer Kombination einer (N*N)-Matrix $T$ und der Matrix $V_N$:
$S = T V_N^T$ (11).
Werden die Formeln (3), (7), (8), (10) und (11) miteinander verknüpft, so läßt sich schreiben:
$X \approx A_N = C S = U_N D^T T V_N^T = U_N G_N V_N^T$ (12).
Hieraus wird die Beziehung:
$G_N = D^T T$ (13)
gewonnen.

Um die Spektralmatrix $S$ und die Konzentrationsmatrix $C$ zu ermitteln, werden die Koeffizienten $d_{jk}$ der Formel (9) durch eine Schätzung bestimmt werden Hierbei wird ein Schätzwert $d_{jk}$ über die Gleichung:

$$d_{jk} = \sum_{i=1}^{M} c_{ij} u_{ik}, \quad j = 1, \ldots, N \text{ und } k = 1, \ldots, N, \qquad (14)$$

ermittelt, wobei die Werte $u_{jk}$ einem Spaltenvektor $u_k$ zugeordnet sind. Zuerst werden Schätzwerte eines Konzentrationsvektors $c_j$ in die Gleichung (14) eingesetzt. Ein solcher erster geschätzter Konzentrationsvektor enthält nur einen Deltaimpuls, dessen Lage durch eine Liniensuche oder Varimax-Rotation (näheres hierzu aus der Druckschrift B.G.M Vandeginste, W. Derks, G Kateman, MULTICOMPONENT SELF-MODELLING CURVE RESOLUTION IN HIGH-PERFORMANCE LIQUID CHROMATOGRAPHY BY ITERATIVE TARGET TRANSFORMATION ANALYSIS, Analytica Chimica Acta, 173 (1985), Seiten 253-264) gefunden wird. Die nach Gleichung (14) ermittelten Ergebnisse werden in die Gleichung (9) eingesetzt. Der durch Lösen der Gleichung (9) gefundene Vektor $c_j$ wird so verändert, daß keine negativen $c_{ij}$ vorkommen und dieser nur ein lokales Maximum aufweist. Mit diesen Werten $c_{ij}$ werden erneut Schätzwerte $\hat{d}_{jk}$ berechnet. Dieser Prozeß wird z.B. dann abgebrochen, wenn eine bestimmte Anzahl von Iterationsschritten erfolgt ist.

Die gemessenen Spektralwerte der Datenmatrix $X$ sind außer von den Probensubstanzen auch von der Trägersubstanz beeinflußt Diese sich auf die Trägersubstanz beziehende Information ist für die chemische Analyse der Probensubstanz uninteressant. Um diese Information aus der Datenmatrix $X$ zu eliminieren, wird bisher vor der Messung mit der Probe eine Spektren-Vormessung der Trägersubstanz ohne Probe durchgeführt. Dabei wird eine Trägersubstanz-Datenmatrix aus M gleichen Spektren einer Messung des Spektrums gebildet, die von der Datenmatrix $X$ anschließend subtrahiert wird. Mit der nach der Subtraktion erhaltenen Matrix wird eine Bestimmung der Konzentrationswerte, wie diese oben beschrieben ist, durchgeführt. Die Spektralwerte der einzelnen Probensubstanzen werden dann nach Bestimmung der Konzentrationsvektoren aus den Formeln (13) und (11) ermittelt.

Die bisher durchgeführte Bestimmung der Konzentrationswerte und der Spektralwerte von Probensubstanzen ist zeitaufwendig, da vor der eigentlichen Messung noch eine Messung mit der Trägersubstanz durchgeführt wird. Außerdem können die berechneten Spektralwerte und Konzentrationswerte der einzelnen Substanzen Fehler aufweisen, wenn bei der eigentlichen Messung Veränderungen in der Meßapparatur, z.B. Veränderung der Lichtintensität der Lichtquelle, gegenüber der Vormessung auftreten. Des weiteren ist es

4

nicht möglich, die Zusammensetzung der Trägersubstanz, die aus verschiedenen Einzelsubstanzen bestehen kann, zeitlich zu variieren.

Der Erfindung liegt daher die Aufgabe zugrunde, ein chemisches Analysegerät zu schaffen, bei dem zur Bestimmung der Konzentrationswerte und Spektralwerte der Probensubstanzen keine Vormessung des Spektrums der Trägersubstanz erforderlich ist.

Die Aufgabe wird bei einem chemischen Analysegerät der eingangs genannten Art dadurch gelöst, daß die Auswerteschaltung außerdem die Konzentrationswerte der Trägersubstanz mittels Approximation durch einen linearen zeitlichen Verlauf ermittelt und daraus die Spektralwerte der Substanzen der Probe und der Trägersubstanz berechnet.

Bei dem erfindungsgemäßen chemischen Analysegerät wird nach Ermittlung der Datenmatrix X von der Auswerteeinheit eine Singuläre-Werte-Zerlegung und anschließend die Bestimmung der Konzentrationswerte der Probensubstanzen mittels einer Schätzung durchgeführt. Die Konzentrationswerte der Trägersubstanz werden dagegen mittels einer Approximation durch einen linearen zeitlichen Verlauf bestimmt. Die Trägersubstanz besteht in der Regel aus verschiedenen Einzelsubstanzen. Wird die Zusammensetzung der Einzelsubstanzen während der Messung konstant gehalten, ergibt sich immer der gleiche Konzentrationswert für die Trägersubstanz während der Messung. Also ist bei einer zeitlichen Konstanz der Trägersubstanzzusammensetzung ein konstanter Konzentrationsverlauf gegeben. Bei einer Variation der Einzelsubstanzen während der Messung ergibt sich ein weitgehend linearer Anstieg oder Abfall des Konzentrationsverlaufes der Trägersubstanz.

Der Konzentrationsvektor, welcher die Konzentrationswerte der Trägersubstanz enthält, wird aus einer Linearkombination eines Spaltenvektors gebildet, der zu einer durch Singuläre-Werte-Zerlegung entstandenen Matrix gehört (siehe Formel (9)). Diese Linearkombination wird gleich einer linearen, den Konzentrationsverlauf darstellenden Funktion gesetzt. Daraus ergibt sich ein Gleichungssystem mit den Unbekannten, welche die lineare Funktion charakterisieren, und den unbekannten Koeffizienten der Linearkombination. Die Unbekannten des überbestimmten Gleichungssystems werden durch eine Näherungsrechnung approximiert. Einsetzen der beiden Unbekannten in die lineare Funktion ergibt den Konzentrationsvektor (Konzentrationsverlauf) der Trägersubstanz. Der lineare Verlauf kann deshalb nur angenähert werden, weil die Messungen nicht unter idealen Voraussetzungen stattfinden.

Nach der Berechnung der Konzentrationswerte der Proben-substanzen und der Trägersubstanz bestimmt die Auswerteeinheit dann die Spektralwerte der Substanzen. Da durch eine Approximation aus den Meßwerten die Konzentrationswerte und die Spektralwerte der Trägersubstanzen ermittelt werden, wird keine Vormessung wie beim Stand der Technik erforderlich. Hierdurch wird also die Meßzeit verringert. Außerdem ist es hierbei auch möglich, mit zeitlich variierenden Lösungsmittelzusammensetzungen eine chemische Analyse vorzunehmen

Bei der Ermittlung der Konzentrationswerte und der Spektralwerte der Substanzen werden nach der Messung also folgende Operationen von der Auswerteeinheit durchgeführt:
Die Auswerteeinheit
- legt die von der Detektoranordnung zu vorgegebenen Zeitpunkten gemessenen Spektralwerte in einem Speicher ab,
- führt nach den Messungen die Singuläre-Werte-Zerlegung der Datenmatrix X, in der in einer Zeile L Spektralwerte einer Messung und in den M Zeilen die Messungen nach ihrem zeitlichen Auftreten aufeinanderfolgend sortiert sind, nach der Formel:

$X = U G V^T$    (15)

mit $G = diag(g_1,...,g_L)$ durch, wobei U eine (M$^*$L)-Matrix, in deren Spalten die L orthonormalen Eigenvektoren von $X X^T$ sind, V eine (L$^*$L)-Matrix, in deren Spalten die L orthonormalen Eigenvektoren von $X^T X$ sind und G eine (L$^*$L)-Matrix ist, deren L Diagonalelemente die Quadratwurzeln der Eigenwerte zu diesen Eigenvektoren enthalten,
- reduziert nach der Singuläre-Werte-Zerlegung die Matrizen U, G und V auf die signifikanten N Spalten, so daß sich eine Matrix $A_N = U_N G_N V_N$ mit dem Rang N ergibt, die eine Näherung der Datenmatrix X darstellt,
- ermittelt anschließend die Konzentrationswerte aller Substanzen durch Berechnung von Konzentrationsvektoren $c_j$ nach der Formel:

$$c_j = \sum_{k=1}^{N} d_{jk} u_k \qquad (16),$$

5

wobei $u_k$ einen Spaltenvektor der Matrix $U_N$ darstellt und wobei die Werte $d_{jk}$, die sich auf eine Substanz der Probe beziehen, durch eine Schätzung ermittelt werden und die Werte $d_{jk}$, die sich auf die Trägersubstanz beziehen, durch eine Approximationsberechnung ermittelt werden, indem der Konzentrationsvektor $c_b$ für die Trägersubstanz gleich einer linearen Funktion $a i + a_0$ für $i = 1, ..., M$ gesetzt wird und das sich daraus ergebende Gleichungssystem

$$\underline{c}_b = a \; i + a_0 = \sum_{k=1}^{N} d_{bk} \; \underline{u}_k \qquad (17)$$

durch eine Ausgleichsrechnung gelöst wird, und

- bestimmt nach der Ermittlung der Konzentrationswerte der Substanzen die Spektralwerte zuerst durch Berechnung einer weiteren Matrix $T$ aus der Matrix $G_N$ und einer Matrix $D$, in der alle Werte, die zusammengefaßt sind, nach der Formel $D^T T = G_N$ und dann durch Berechnung einer Spektralmatrix $S$, in der alle Spektralwerte zusammengefaßt sind, aus der Matrix $T$ und der Matrix $V_N$ nach der Formel $S = T V_N$.

Die Konzentrationswerte der Trägersubstanz werden also durch eine lineare Funktion $a i + a_0$, $i = 1, M$, angenähert Das Gleichungssystem

$$\underline{c}_b = a \; i + a_0 = \sum_{k=1}^{N} d_{bk} \; \underline{u}_k \qquad (18)$$

bildet ein überbestimmtes Gleichungssystem, das sich durch eine Ausgleichsrechnung, wie das z.B. aus dem Buch von Josef Stoer "Einführung in die Numerische Mathematik I", 2. Auflage, Springer Verlag, Berlin Heidelberg New York, 1976. Seiten 165 bis 175, bekannt ist, lösen läßt. Alle Vektoren $c_j$ und $c_b$ bilden eine Matrix $C$. Die Koeffizienten $d_{jk}$ werden in einer Matrix $D$ zusammengefaßt, so daß sich ergibt (siehe Formel (10)):

$C = U_N D^T$    (19).

Durch Lösen der folgenden Formel (siehe Formel (13))

$G_N = D^T T$    (20)

wird anschließend die Matrix $T$ bestimmt. Die Spektren der Substanzen der Probe und der Trägersubstanz lassen sich dann durch eine Matrixmultiplikation ermitteln (siehe Formel (11)):

$S = T V_N^T$    (21).

Vorteilhaft läßt sich das chemische Analysegerät für die Flüssigkeitschromatographie einsetzen. Hierbei ist vorgesehen, daß vor der Detektoranordnung eine chromatographische Säule angeordnet ist, in welcher die Trägersubstanz mit den Substanzen der Probe zeitlich auftrennbar sind, und daß in der Detektoranordnung als Empfängeranordnung eine Anzahl von Fotodioden vorgesehen sind, welche die Intensität des von den auftrennbaren Substanzen absorbierten Lichts bei jeweils verschiedenen Wellenlängen messen.

Ein Ausführungsbeispiel der Erfindung wird nachstehend anhand der Zeichnungen näher erläutert. Es zeigen:

Fig. 1 ein schematisch dargestelltes chemisches Analysegerät für die Flüssigkeitschromatographie und

Fig. 2 ein Flußablaufdiagramm zur Erläuterung einzelner Programmschritte, die eine in Fig. 1 dargestellte Auswerteeinheit durchführt.

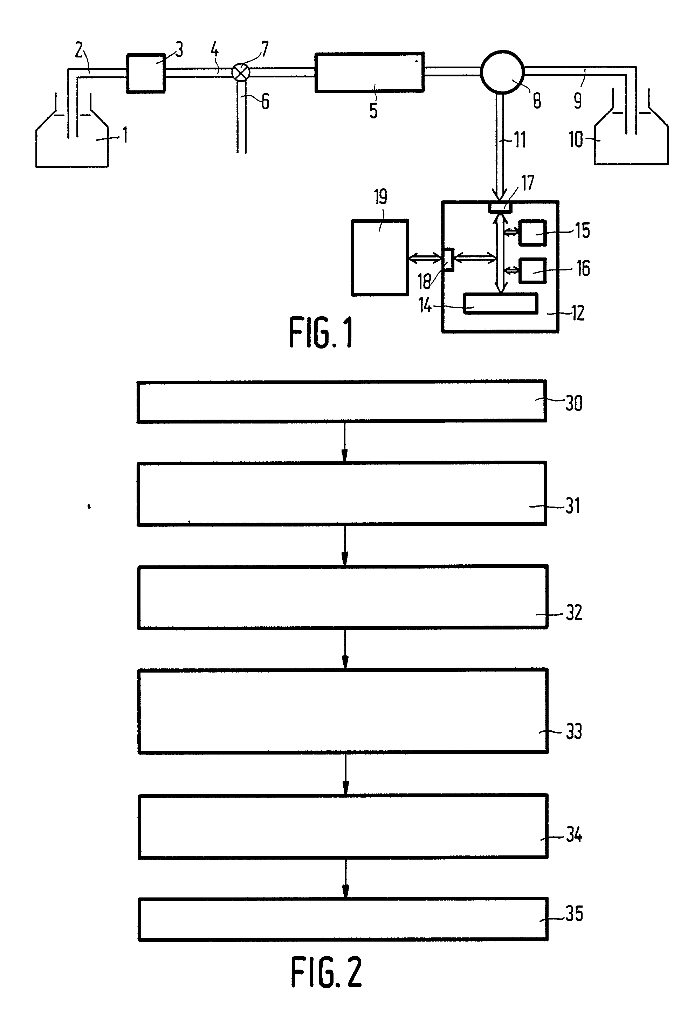

Das in Fig 1 schematisch dargestellte chemische Analysegerät zur Flüssigkeitschromatographie weist einen Behälter 1 auf, in dem eine flüssige Trägersubstanz gespeichert ist. In die aus mehreren Einzelsubstanzen bestehende, flüssige Trägersubstanz ragt eine Leitung 2 hinein, die mit einer Pumpe 3 verbunden ist. Die Pumpe 3 befördert über die Leitung 2 aus dem Behälter 1 Trägersubstanz in eine Leitung 4, die zu einer chromatographischen Säule 5 verläuft. Die Pumpe sorgt dabei für einen konstanten Durchfluß der Trägersubstanz durch die chromatographische Säule 5. Die Leitung 4 weist eine Verzweigung 6 auf, in die Probensubstanzen über ein Ventil 7 eingegeben werden, deren Konzentrationen und Spektren bestimmt werden sollen. Die chromatographische Säule 5, die mit Quarzpartikeln gefüllt ist, trennt die flüssigen Substanzen der Probe zeitlich auf Durch Wechselwirkung mit der Oberfläche des Säulenmaterials verweilen die Substanzen der Probe mit unterschiedlicher Dauer in der Säule. Die aus der chromatographischen Säule 5 austretende Trägersubstanz mit den Probenbestandteilen wird durch eine Detektoranordnung 8 geleitet. Die Detektoranordnung enthält eine Lichtquelle, die Ultraviolettlicht auf die Substanzen strahlt und deren Lichtabsorption von einer Empfängeranordnung gemessen wird. Die Empfängeranordnung besteht aus einer Anzahl von Fotodioden (z B. 128), die das Licht bei unterschiedlichen Wellenlängen messen. Über einen Abfluß 9 werden die gemessenen Substanzen in einen Auffangbehälter 10 geleitet.

Die Detektoranordnung 8 führt eine Messung der durch sie hindurchtretenden Substanzen in äquidistanten Zeitabschnitten, z.B. jede Sekunde, durch. Eine Gesamtmessung dauert in der Regel zwischen 3 und 30 Minuten. d.h es werden dabei zwischen 180 und 2400 Messungen des Spektrums vorgenommen. Die Daten werden über elektrische Leitungen 11 einer Auswerteeinheit 12 zugeführt. Die Auswerteeinheit 12 enthält eine zentrale Recheneinheit 14, z.B. einen Mikroprozessor, mindestens einen Schreib/Lesespeicher 15 (RAM), mindestens einen Festwertspeicher 16 (ROM), einen Eingabebaustein 17 und einen Ausgabebaustein 18. Nach jeder Messung werden die gemessenen Spektralwerte über die Leitung 11, den Eingabebaustein 17 in den Schreib/Lesespeicher 15 eingelesen. Die Auswerteeinheit 12 berechnet aus den gemessenen Spektralwerten die Konzentrationswerte und die Spektralwerte der einzelnen Probensubstanzen und der Trägersubstanz. Die Ergebnisse werden über einen Ausgabebaustein 18 zu einer Anzeigeeinheit 19 geleitet.

In Fig 2 ist ein Flußablaufdiagramm dargestellt, mit welchem die einzelnen Programmschritte erläutert werden, welche die Auswerteeinheit 12 zur Bestimmung der Konzentrationswerte und der Spektralwerte der Probensubstanzen und der Trägersubstanz durchführt. Nach der Messung werden die in dem Schreib/Lesespeicher 15 abgelegten Daten in einer Datenmatrix X zusammengefaßt, wie das die Formel (1) zeigt (Block 20). Anschließend wird die Singuläre-Werte-Zerlegung (Block 31) der Datenmatrix X durchgeführt, wie das durch die Formel (5) beschrieben ist. Die Diagonalmatrix $\underline{G}$ = diag $(g_1,....,\underline{g}_L)$ wird so umsortiert (Block 32). daß $g_1$ der größte und $g_L$ der kleinste wert ist. Die singulären Werte $g_i, i = 1,....,L$, werden durch Informationsanteile bzw. durch Rauschanteile hervorgerufen. Die dem Betrag nach kleineren $g_i$ werden durch Rauschanteile hervorgerufen, die in der Regel nicht einen bestimmten Betrag überschreiten. Dieser Betrag dient als ein Schwellwert. mit dem die einzelnen $g_i$ verglichen werden. Der singuläre wert, der gerade größer ist als der Schwellwert, wird als $g_N$ bezeichnet. Die Matrix $\underline{G}$ wird dann um die $(N + 1)$-te bis L-te Spalte und Zeile reduziert, so daß die singulären Werte $g_{N-1},....,\underline{g}_L$ herausfallen. Des weiteren werden die Matrizen $\underline{U}$ und $\underline{V}$ um die $(N + 1)$-te bis L-te Spalte reduziert. Die sich so ergebenden Matrizen werden mit $\underline{U}_N$ und $\underline{V}_N$ bezeichnet (siehe Formel (7)).

Anschließend werden die Koeffizienten $d_{jk}$ durch Schätzung(Block 33), wie das oben.beschrieben ist, ermittelt (siehe Formeln (9) und (14)). Mit der Bestimmung der Koeffizienten $d_{jk}$ werden die Konzentrationsvektoren $\underline{c}_j$ für die Probensubstanzen berechnet.

Wie in Block 34 gezeigt wird, werden danach die Konzentrationswerte für die Trägersubstanz berechnet. Für den Konzentrationsverlauf der Trägersubstanz wird eine lineare Funktion angesetzt, die wie in Formel (18) beschrieben ist, aus zwei Unbekannten a und $a_0$ besteht. Es muß also das Gleichungssystem

$$\underline{c}_b = a\, i + a_0 = \sum_{k=1}^{N} d_{bk}\, \underline{u}_k, \quad i = 1,\ldots M, \qquad (22)$$

gelöst werden, wobei der Koeffizient $a_0 = 1$ gesetzt werden kann (Normierung) Es müssen dann $N + 1$ Unbekannte (N- mal $d_{bk}$ und a) bestimmt werden. Das in der Regel überbestimmte Gleichungssystem wird durch eine Ausgleichsrechnung gelöst, wie das z.B. aus dem Buch von Josef Stoer "Einführung in die Numerische Mathematik I", 2. Auflage, Springer Verlag, Berlin Heidelberg New York, 1976 ab Seite 175 bekannt ist Nach Bestimmung der $N + 1$ Unbekannten wird der Konzentrationsvektor $\underline{c}_b$ der Trägersubstanz berechnet.

Nach der Ermittlung der Konzentrationsvektoren $\underline{c}_j$ der Probensubstanzen und des Konzentrationsvektors $\underline{c}_b$, die in der Konzentrationsmatrix C zusammengefaßt sind, und der Matrix D, in der alle Koeffizienten $d_{jk}$ zusammengefaßt sind, wird über die Gleichung (20) die Matrix $\underline{T}$ berechnet und anschließend die Spektralmatrix $\underline{S}$ durch Berechnung der Gleichung (21) bestimmt (Block 35). Nach der Bestimmung der Spektralwerte und der Konzentrationswerte der Probensubstanzen und der Trägersubstanz kann die Identifizierung der einzelnen Probensubstanzen vorgenommen werden.

**Ansprüche**

1. Chemisches Analysegerät zur Bestimmung der Konzentrationswerte und der Spektralwerte von zeitlich aufgetrennten Substanzen einer Probe in einer flüssigen oder gasförmigen Trägersubstanz

mit einer Detektoranordnung (8), welche wenigstens eine Lichtquelle zur Sendung von Licht auf die zeitlich aufgetrennten Substanzen der Probe und die Trägersubstanz und welche eine Empfängeranordnung enthält zum Messen der Intensität des von den Substanzen beeinflußten Lichts über einen vorgegebenen Spektralbereich und über eine vorgegebene Dauer, und

mit einer Auswerteeinheit (12), welche die von der Detektoranordnung ermittelten Spektralwerte jeder Messung in einer Datenmatrix X zusammenfaßt und welche die Konzentrationswerte einer Substanz nach einer Singuläre-Werte-Zerlegung der Datenmatrix X durch Schätzung ermittelt,

dadurch gekennzeichnet, daß die Auswerteschaltung (12) außerdem die Konzentrationswerte der Trägersubstanz mittels Approximation durch einen linearen zeitlichen Verlauf ermittelt und daraus die Spektralwerte der Substanzen der Probe und der Trägersubstanz berechnet.

2. Chemisches Analysegerät nach Anspruch 1,
dadurch gekennzeichnet, daß die Auswerteeinheit (12)

- die von der Detektoranordnung (8) zu vorgegebenen Zeitpunkten gemessenen Spektralwerte in einem Speicher (15) ablegt,

- nach den Messungen die Singuläre-Werte-Zerlegung der Datenmatrix X, in der in einer Zeile die L Spektralwerte einer Messung und in den M Zeilen die Messungen nach ihrem zeitlichen Auftreten aufeinanderfolgend sortiert sind, nach der Formel

$$X = U \, G \, V^T$$

mit $G = \mathrm{diag}\,(g_1,...,g_L)$ durchführt, wobei U eine (M·L)-Matrix, in deren Spalten die L orthonormalen Eigenvektoren von $X^T X$ sind, V eine (L·L) Matrix, in deren Spalten die L orthonormalen Eigenvektoren von $X^T X$ sind und G eine (l·L)-Matrix ist, deren L Diagonalelemente die Quadratwurzeln der Eigenwerte zu diesen Eigenvektoren enthalten,

- nach der Singuläre-Werte-Zerlegung die Matrizen U, G und V auf die signifikanten N Spalten reduziert, so daß sich eine Matrix $A_N = U_N \, G_N \, V_N^T$ mit dem Rang N ergibt, die eine Näherung der Datenmatrix X darstellt,

- anschließend die Konzentrationswerte aller Substanzen durch Berechnung von Konzentrationsvektoren $c_i$ nach der Formel

$$c_j = \sum_{k=1}^{N} d_{jk} \, u_k$$

ermittelt, wobei $u_k$ einen Spaltenvektor der Matrix $U_N$ darstellt und

wobei die Werte $d_{jk}$, die sich auf eine Substanz der Probe beziehen, durch eine Schätzung ermittelt werden und die Werte $d_{jk}$, die sich auf die Trägersubstanz beziehen, durch eine Approximationsberechnung ermittelt werden, indem der Konzentrationsvektor $c_b$ für die Trägersubstanz gleich einer linearen Funktion a i + $a_0$ für i = 1, ..., M gesetzt wird und das sich daraus ergebende Gleichungssystem

$$c_b = a \, i + a_0 = \sum_{k=1}^{N} d_{bk} \, u_k$$

durch eine Ausgleichsrechnung gelöst wird, und

- nach der Ermittlung der Konzentrationswerte der Substanzen die Spektralwerte zuerst durch Berechnung einer weiteren Matrix T aus der Matrix $G_N$ und einer Matrix D, in der alle Werte $d_{jk}$, die zusammengefaßt sind, nach der Formel $D^T T = G_N$ und dann durch Berechnung einer Spektralmatrix S, in der alle Spektralwerte zusammengefaßt sind, aus der Matrix T und der Matrix $V_N$ nach der Formel $S = T \, V_N^T$ bestimmt.

3. Chemisches Analysegerät für die Flüssigkeitschromatographie nach einem der vorhergehenden Ansprüche, dadurch gekennzeichnet, daß vor der Detektoranordnung (8) eine chromatographische Säule (5) angeordnet ist, in welcher die Trägersubstanz mit den Substanzen der probe zeitlich auftrennbar sind, und daß in der Detektoranordnung (8) als Empfängeranordnung eine Anzahl von Fotodioden vorgesehen sind, welche die Intensität des von den auftrennbaren Substanzen absorbierten Lichts bei jeweils verschiedenen Wellenlängen messen.

FIG.1

FIG.2

PHD 88-160